# EUROPÄISCHE PATENTANMELDUNG

(11) **EP 1 300 100 A1**
(43) Veröffentlichungstag der Anmeldung: **09.04.2003**
(21) Anmeldenummer: 02450203.1
(22) Anmeldetag: 11.09.2002
(51) Int. Cl.: A47C 7/38

(54) **Kopfstütze für Sitzmöbel**

(30) Priorität: 03.10.2001 AT 7592001 U
(71) Anmelder: Hodry Metallwarenfabrik R.Hoppe Ges.m.b.H & Co. KG, 1150 Wien (AT)
(72) Erfinder: Moldovan, Adrian, 1190 Wien (AT)
(74) Vertreter: Rippel, Andreas, Dipl.-Ing.

(57) **Zusammenfassung**

Bei einer Kopfstütze für Sitzmöbel, die in die Rückenlehne (4) des Sitzmöbels austauschbar eingesteckt wird, ist der Kopfstützenpolster (1) mit einem einzigen flachen Arm (2) verbunden und an der Rückenlehne (4) ist eine diesen Arm (2) wenigstens teilweise umgreifende Führung (5) angeordnet.

Dadurch wird eine einfache Kopfstütze geschaffen.

## Beschreibung

Die Erfindung bezieht sich auf eine Kopfstütze für Sitzmöbel, die in die Rückenlehne des Sitzmöbels austauschbar eingesteckt wird.

Es ist oft erwünscht, manchmal jedoch unerwünscht, an einem Sitzmöbel eine Kopfstütze vorzufinden, sodaß der Benützer in einer Ruhestellung seinen Kopf anlehnen kann. Manche Personen, z.B. Damen mit aufwendigen Frisuren, wünschen jedoch eine solche Kopfstütze nicht.

Dieses Problem widerstreitender Wünsche kann jedoch durch eine austauschbare Kopfstütze gelöst werden. Je nach Wunsch des jeweiligen Benützers wird die Kopfstütze eingesteckt oder weggenommen.

Bisher hat man für solche austauschbare Kopfstützen für Sitzmöbel im wesentlichen solche Kopfstützen verwendet, wie sie im Kraftfahrzeugbau üblich sind. Bei diesen Kopfstützen ragen vom Kopfstützenpolster zwei Stangen aus, die in korrespondierende Führungen in der Rückenlehne des Kraftfahrzeuges eingesteckt werden. Durch die beiden Stangen wird eine gute Festigkeit der Kopfstütze gewährleistet. Allerdings ist die Herstellung und Anpassung derartiger Kopfstützen relativ aufwendig.

Die Erfindung geht von der Erkenntnis aus, daß bei einem Sitzmöbel keinesfalls Beanspruchungen auftreten können, wie sie bei Kraftfahrzeugen möglich sind. Ziel der Erfindung ist es, eine Kopfstütze für Sitzmöbel zu schaffen, die einfacher aufgebaut ist als die bekannten Kopfstützen für Sitzmöbel. Erreicht wird dies dadurch, daß der Kopfstützenpolster mit einem einzigen flachen Arm verbunden ist und an der Rückenlehne eine diesen Arm wenigstens teilweise umgreifende Führung angeordnet ist. Bei einer erfindungsgemäßen Kopfstütze genügt nur ein Arm, insbesondere aber fällt bei der Montage die Anpassung zweier Führungen an den Abstand zweier Stangen weg.

Bei einer zweckmäßigen Ausführungsform der Erfindung ist die Führung als einseitig offene, etwa U-förmige Schiene ausgebildet, deren freie Schenkel zum Übergreifen des Armes abgewinkelt sind. Dadurch sind Schraublöcher zur Befestigung der Führung frei zugänglich.

Nach einem weiteren Merkmal der Erfindung ist am unteren Ende der Schiene ein Begrenzungsanschlag für den Arm herausgebogen. Die Schiene kann daher durch Biegeoperationen aus einem Materialstück hergestellt werden.

Um ein leichtes Einführen des Armes in die Führung bzw. Schiene zu erreichen, ist zweckmäßig der Arm an seinem unteren Ende keilförmig ausgebildet.

Die Führung für den flachen Arm kann im Inneren der Rückenlehne angeordnet sein.

Es ist aber auch möglich die Führung an der Hinterseite der Rückenlehne anzuordnen. Dies kann dann zweckmäßig sein, wenn die Hinterseite der Rückenlehne im Normalfall nicht sichtbar ist, sodaß die Führung nicht stört.

Nachstehend ist die Erfindung anhand eines in den Zeichnungen dargestellten Ausführungsbeispieles näher beschrieben, ohne auf dieses Beispiel beschränkt zu sein. Dabei zeigt in schaubildlicher Ansicht die
Fig. 1 eine erfindungsgemäße Kopfstütze vor dem Einführen in die zugehörige Führung, wobei die Rückenlehne im Bereich dieser Führung aufgeschnitten dargestellt ist.
Fig. 2 stellt in gegenüber der Fig. 1 vergrößertem Maßstab eine erfindungsgemäße Führung bzw. Schiene dar.

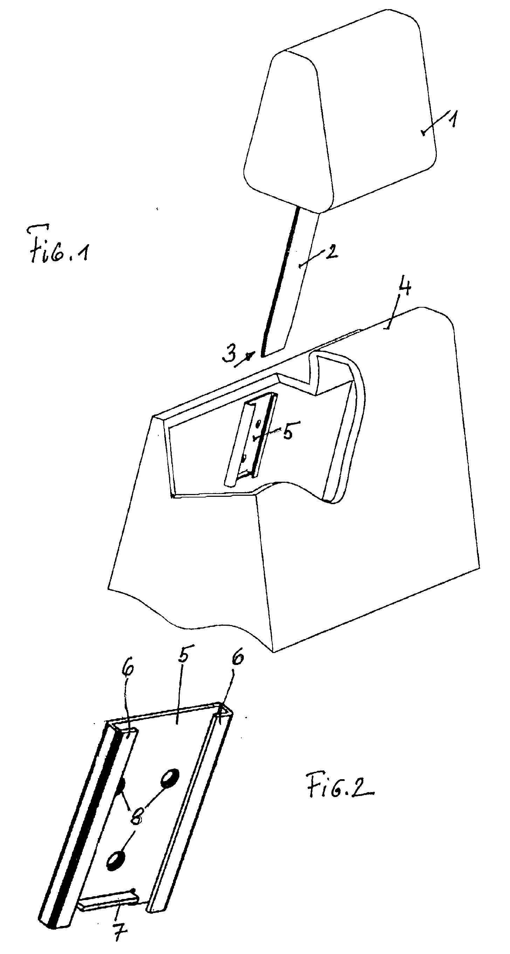

Gemäß Fig. 1 ist ein Kopfstützenpolster 1 mit einem nach unten ragenden flachen Arm 2 verbunden. An seinem unteren Ende 3 ist der Arm 2 abgeschrägt bzw. keilförmig ausgebildet.

Im Inneren der Rückenlehne 4 eines Sitzmöbels ist eine als Führung für den Arm 2 ausgebildete Schiene 5 befestigt. Diese Führung 5 ist in Fig. 2 deutlicher dargestellt. Es ist ersichtlich, daß die Schiene 5 etwa U-förmig ausgebildet ist, wobei die freien Schenkel des U derart abgewinkelt sind, daß sie den Arm 2 übergreifen können.

Am unteren Ende der Schiene 5 ist ein Begrenzungsanschlag 7 für den eingeschobenen Arm 2 herausgebogen. Zur Befestigung der Schiene 5 an der Rückenlehne 4 sind Schraublöcher 8 vorgesehen.

Im Rahmen der Erfindung sind zahlreiche Abänderungen möglich. Wie bereits ausgeführt, kann die Schiene 5 auch an der Rückseite der Rückenlehne befestigt werden. Auch wäre zur Vergrößerung der Festigkeit des Armes 2 die Anordnung einer längs verlaufenden mittigen Rippe möglich. Dabei müßte die Schiene 5 nicht verändert werden und der Widerstand gegen ein Verbiegen nach hinten wäre größer.

## Patentansprüche

1. Kopfstütze für Sitzmöbel, die in die Rückenlehne (4) des Sitzmöbels austauschbar eingesteckt wird, **dadurch gekennzeichnet, daß** der Kopfstützenpolster (1) mit einem einzigen flachen Arm (2) verbunden ist und an der Rückenlehne (4) eine diesen Arm (2) wenigstens teilweise umgreifende Führung (5) angeordnet ist.

2. Kopfstütze für Sitzmöbel nach Anspruch 1, **dadurch gekennzeichnet, daß** die Führung als einseitig offene, etwa U-förmige Schiene (5) ausgebildet ist, deren freie Schenkel (6) zum Übergreifen des Armes (2) abgewinkelt sind.

3. Kopfstütze für Sitzmöbel nach Anspruch 2, **dadurch gekennzeichnet, daß** am unteren Ende der Schiene (5) ein Begrenzungsanschlag (7) für den Arm (2) herausgebogen ist.

4. Kopfstütze für Sitzmöbel nach einem der Ansprüche 1 bis 3, **dadurch gekennzeichnet, daß** der Arm (2) an seinem unteren Ende (3) keilförmig ausgebildet ist.

5. Kopfstütze für Sitzmöbel nach einem der Ansprüche 1 bis 4, **dadurch gekennzeichnet, daß** die Führung (5) im Inneren der Rückenlehne (4) angeordnet ist.

6. Kopfstütze für Sitzmöbel nach einem der Ansprüche 1 bis 4, **dadurch gekennzeichnet, daß** die Führung (5) an der Hinterseite der Rückenlehne (4) angeordnet ist.
